# NEUE EUROPÄISCHE PATENTSCHRIFT

(11) **EP 3 141 384 B2**
(45) Veröffentlichungstag und Bekanntmachung des Hinweises auf die Entscheidung über den Einspruch: **21.07.2021**
(45) Hinweis auf die Patenterteilung: 12.09.2018
(21) Anmeldenummer: 16186134.9
(22) Anmeldetag: 29.08.2016
(51) Int. Cl.: B32B 5/02, B32B 7/12, B32B 27/16, B32B 27/20, B32B 27/28, B32B 27/30, B32B 27/32, B32B 27/40, B32B 3/26, B32B 3/30, D06N 3/18, B32B 7/02, D06N 3/08, B32B 27/08, B32B 27/12

(54) **FOLIE**
FILM
FEUILLE

(30) Priorität: 11.09.2015 DE 102015011894
(43) Veröffentlichungstag der Anmeldung: 15.03.2017
(73) Patentinhaber: Konrad Hornschuch AG, 74679 Weissbach (DE)
(72) Erfinder: Schaefer, Philipp, 30175 Hannover (DE); Kammerer, Birgit, 74635 Kupferzell (DE)
(74) Vertreter: Wagner Albiger & Partner Patentanwälte mbB

(56) Entgegenhaltungen:
- EP-A1- 0 949 120
- EP-A1- 1 306 208
- EP-A1- 1 538 175
- EP-A1- 1 607 452
- EP-A1- 2 168 762
- EP-A1- 3 106 297
- EP-A1- 3 141 384
- WO-A1-96/03458
- WO-A1-2008/098809
- WO-A1-2011/008336
- WO-A1-2016/008613
- WO-A1-2016/203417
- WO-A1-2017/178127
- WO-A2-00/46045
- CN-U- 203 805 443
- DE-A1- 3 628 322
- DE-A1-102007 055 356
- DE-A1-102015 011 894
- DE-U1-202013 005 172
- GB-A- 1 520 964
- JP-A- H06 116 874
- JP-A- H09 193 189
- PT-A- 107 725
- US-A- 3 023 126
- US-A- 4 657 706
- US-A1- 2001 051 256
- US-A1- 2017 204 234
- "Blockierte Isocyanate", Wikipedia, 10 August 2018 (2018-08-10), Retrieved from the Internet: URL:https://de.wikipedia.org/w/index.php?t itle=blockierte_isocyante&oldid=179888846
- "Polyurethane", Wikipedia, 10 May 2019 (2019-05-10), Retrieved from the Internet: URL:https://de.wikipedia.org/w/index.php?t itle=polyurethane&oldid=188436630
- Chemgapedia entry 'Polyurethane I - Grundlagen; Segmentbildung und Vernetzung'
- Submission by Benecke-Kaliko dated February 4, 2019 in the opposition case against EP 1927466 B1
- "Polyurethane", Wikipedia, 22 May 2019 (2019-05-22), Retrieved from the Internet: URL:https://en.wikipedia.org/w/index.php?t itle=polyurethane&oldid=898300099
- Nancy Williams: "Why Does Colour Vary in Natural Polyurethanes?", , 22 May 2014 (2014-05-22), Retrieved from the Internet: URL:http://harknessindustries.com/colour-v ary-natural-polyurethanes
- W.C. Geddes: "Mechanism of PVC Degradation", Rubber Chemistry and Technology, vol. 40, no. 1, March 1967 (1967-03), pages 177-216,
- , Retrieved from the Internet: URL:https://www.adeka.co.jp/en/chemical/pr oducts/plastic/faq_01.html
- Claus Zuerung: "Leather Imitates" In: "Ullmann's Encyclopedia of Industrial Chemistry", 1 January 2012 (2012-01-01), Wiley-VCH pages 1-13, DOI: 10.1002/14356007.a15_283.pub2,
- "SHORE Haerte", , Retrieved from the Internet: URL:"SHORE-Haerte", Retrieved from the Internet <URL:https://wiki.polymerservice-merseburg .de/index.php?title=SHORE-H%C3%A4rte&print able=yes>
- "Thermoplastische Elastomere", Wikipedia entry, 9 November 2018 (2018-11-09), Retrieved from the Internet: URL:https://de.wikipedia.org/w/index.php?t itle=Thermoplastische_Elastomere&oldid=182 596978
- "Polyacrylic acid", Wikipedia, 30 April 2019 (2019-04-30), Retrieved from the Internet: URL:https://en.wikipedia.org/w/index.php?t itle=Polyacrylic_acid&oldid=894808453
- "Polyvinylchlorid", Wikipedia, 4 June 2019 (2019-06-04), Retrieved from the Internet: URL:https://de.wikipedia.org/w/index.php?t itle=Polyvinylchlorid&oldid=189251474

## Beschreibung

Gegenstand der Erfindung ist eine Folie gemäß dem Oberbegriff des Patentanspruchs 1 und ein Gegenstand gemäß Patentanspruch 11. Die Folie kann insbesondere als Folienbahn vorgegebener Länge vorliegen.

Mit Polyurethan beschichtetes Leder und mit Polyurethan beschichtetes Mikrofaservlies enthalten als Griffmittel trennen wirkende Substanzen wie Wachs, welches als Antihaftmittel wirkt, sodass eine partielle Farbaufbringung, welche dauerhaft hält und ausreichend abriebfest ist, nicht möglich ist. Stark strukturierte Oberflächen, vor allem aber Nubuk- und Veloursoberflächen, können nicht partiell bedruckt werden, ebenso wenig wie tiefstrukturierte Oberflächen. Deswegen wurde in der US 6177198 B1 vorgeschlagen, Symbole mittels Laserbehandlung in die zur Herstellung der Struktur der Oberfläche eingesetzte Matrize zu gravieren. Damit können allerdings nur einfarbige Glanz-Matt-Effekte erzielt werden. Speziell die Autoindustrie wünscht, partiell bedruckte Formatzuschnitte auch für den Sitzbereich. Dies hat sich im Langzeitgebrauch nicht bewährt, da die Druckfarbe unabhängig von eventuell vorhandenen trennendwirkenden Substanzen auf der Oberfläche, sich entweder löst oder die Abriebeigenschaften nicht ausreichend sind.

Es ist Kunstleder bekannt, welches eine Oberflächenschicht, hergestellt aus Polyurethan aufweist. Die darunter liegende, andersfarbige Unterschicht, besteht ebenfalls aus Polyurethan und ist nicht thermoplastisch. Beim Lasern wird, zumindest teilweise, die Oberschicht entfernt, und in die Unterschicht partiell hinein gelasert, wobei toxische Abbaustoffen, unter anderem Blausäure, entstehen.

Es ist auch bekannt mit Polyurethan beschichtet Narbenleder zu lasern. Dabei wird die dünne Polyurethanfinishschicht entfernt. Wenn der Laserstrahl die Finishschicht durchdringt kommt es bei dem Narbenleder zu Verbrennungen, die sich in unkontrollierte Farbveränderungen darstellen. Bei chromgegerbten Ledern kann als Abbauprodukt das toxische Chrom 6 entstehen.

DE 10 2007 055 356 A1 beschreibt eine laserbeschriftbare, mehrschichtige Folie. Der Erfindung liegt die Aufgabe zugrunde eine Folie zu schaffen, die nach dem Lasern eine zweifarbige Oberfläche aufweist, bei welcher die partiellen Farbbereiche, tiefer liegend als die Oberflächenschicht. Die Folie ist auch in ihren Farbbereichen abriebfest, dauerbiegefest.

Vor Allem gehört es zur Aufgabe, die bei der Laserbehandlung von Polyurethanen entstehenden gesundheitsschädlichen Gase und Abbauprodukte, ganz erheblich zu reduzieren oder zu vermeiden. Ferner gehört es zur Aufgabe, dass die Folie beim Laservorgang mittels Wärme und Druck prägbar und verformbar ist.

Erfindungsgemäß ist zur Lösung dieser Aufgabe eine mehrschichtige Folie gemäß Patentanspruch 1 vorgesehen. Es ist vorgesehen
- dass die Deckschicht dünn ist und aus aliphatischem, vernetztem, gegebenenfalls nicht mehr thermoplastische Eigenschaften besitzendem, Polyesterpolyurethan und/oder Polyetherpolyurethan und/oder Polyacrylat, und/oder deren Mischungen ist,
- dass die Basisschicht eine Schicht aus Polyolefin oder PVC ist und thermoplastisch ist
- dass die Deckschicht und die Basisschicht unterschiedliche Farbe besitzen und/oder ihr Gehalt an Farbpigmenten unterschiedlich groß ist
- dass die Basisschicht auch transparent sein kann, also keine Pigmente enthält
- dass **gegebenenfalls** die Deckschicht mit der verbundenen Basisschicht eine Härte zwischen 55 und 95 Shore A aufweisen.

Die Erfindung ist in den Patentansprüchen erläutert. Die Erfindung betrifft somit eine auf einem Kalander oder Extruder hergestellte Folienbahn oder gegebenenfalls eine Streichfolie, die gegebenenfalls mit einem Substrat verbunden ist, wobei die Folie eine Deckschicht und eine Basisschicht umfasst. Die Deckschicht wird mit einer wässrigen Polyurethandispersion und/oder einer Polyurethanlösung und/oder einer Polyacrylatdispersion, und/oder einer Polyacrylatlösung oder deren Mischungen erstellt. Die Basisschicht ist ausgeprägt thermoplastisch und besteht aus Polyolefin oder PVC. Die beiden Schichten stehen farblich im Kontrast zueinander, sodass sich nach einer Laserbehandlung farbliche Effekte erzielen lassen. Die Struktur der Deckschicht kann das Aussehen von Velours, einem Kohlenstofffasergewebe, einer technischen Oberfläche, z. B. mit geometrischen Mustern etc., oder eine Ledemarbenstruktur haben. In der Deckschicht kann mittels Laser ein Muster durch Abtragung von Material ausgebildet werden. Das Substrat kann ein textiler Träger, wie zum Beispiel ein Abstandsgewirke, Gewebe, Gewirke, Vlies oder ein Leder sein. Die bevorzugten Einsatzgebiete der Folie oder derartiger Folienbahnen sind Formatzuschnitte für die Innenausstattung von Fahrzeugen, Flugzeugen, Schiffen oder für den Bezug von Gegenständen, z.B. Möbel, Schuhe, insbesondere Athletikschuhe, Lederwaren, Smartphone-Hüllen, Motorrad-/Fahrradsattel, Sportgeräte und dergleichen.

Bei den verwendeten Polyurethandispersionen und/oder Polyurethanlösungen handelt es sich vorteilhaft um aliphatische Polyester-, Polycarbonat- und/oder Polyetherpolyurethane oder Mischungen daraus. Im Falle, dass die Basisschicht aus PVC besteht, besteht die Oberschicht vorzugsweise aus Polyacrylat.

Für die Haltbarkeit und den Einsatz ist es von Vorteil, wenn die Basisschicht aus Polyolefin 4 bis 18 Gew.-% Farbpigmente, gegebenenfalls Metallpigmente und/oder lichtreflektierende Pigmente und/oder, im Falle einer Basisschicht aus PVC, enthält diese zwischen 20 bis 55 Gew.% Weichmacher bezogen auf den PVC-Anteil und/oder dass die Basisschicht eine Dicke von 0,15 bis 0,40 mm aufweist und/oder wenn die Deckschicht 3 bis 11 Gew.-% Farbpigmente enthält und/oder dass die Deckschicht eine Dicke von 0,01 bis 0,06 mm aufweist. Dabei ist zweckmäßigerweise vorgesehen, dass die Deckschicht, die Basisschicht und das Substrat eine Gesamtdicke besitzen, die zwischen 0,09 und 3,0 mm, vorzugsweise zwischen 0,11 und 0,14 mm, liegt und dass die mit der Basisschicht verbundene Deckschicht sowohl vor als auch nach der Laserbehandlung gegebenenfalls thermisch geprägt werden kann.

Die glatte oder strukturierte Deckschicht kann zwischen 1,5 und 9,5 Gew.-% Polysiloxan, bezogen auf ihr Gesamtgewicht enthalten. Die Basisschicht ist silikonfrei.

Die Deckschicht kann zwischen 2 und 6 Vol.-% thermoplastische Mikrohohlkugeln mit einer Größe zwischen 15 µm und 40 µm enthalten. Dadurch lässt sich die Deckschicht mittels Laser an den gewünschten Stellen sehr rasch und schadstoffarm entfernen. Auch der Silikonanteil in der Deckschicht reduziert die Entstehung toxischer Abbauprodukte. Im Gegensatz zum farblichen Bedrucken stört hier der hohe Polysiloxananteil nicht.

Die Deckschicht und die Basisschicht enthalten **gegebenenfalls** jeweils zwischen 3 bis 18 Gew.-% an Farbpigmenten, die in der Deckschicht und in der Basisschicht farblich unterschiedlich sind.

Ein hoher Silikonanteil in der Deckschicht begünstigt nicht nur die Haptik, sondern auch die Abriebeigenschaften und das Dauerbiegeverhalten.

Die genannten Zuschlagsstoffe reduzieren die beim Lasern entstehenden toxischen Abbauprodukte.

Die erfindungsgemäße Folie mit einer bei der Herstellung ausgebildeten einfarbigen Deckschicht bzw. Oberfläche ist mit einer an sich bekannten Laservorrichtung in eine Folie mit einer zweifarigen Oberfläche überführt, indem Bereiche der Deckschicht abgetragen werden und die Basisschicht in diesen Bereichen freigelegt sind.

In der Deck- und/oder Basisschicht können Signal- oder Tagesleuchtfarben enthalten sein. So lässt sich z. B. ein Gürteltier, das aus einer Vielzahl von Strichen und Linien besteht in einer Größe zwischen 15 und 10 cm bei mittlerer Energieeinstellung eines Lasers bei einer z.B. schwarzen Deckschicht z.B. rot, aufgrund einer roten Basisschicht, darstellen.

Erfindungsgemäß werden die besten Abriebseigenschaften erzielt, wenn die Deckschicht nur pixelartig entfernt wird, so dass zwischen den freigelegten Zonen der Basisschicht die Deckschicht noch vorhanden ist.

Im Rahmen der Erfindung ist es auch möglich, nicht nur farblich unterschiedliche Effekte zu erzielen, sondern auch funktionelle Effekte, wenn z.B. die Basisschicht weicher und/oder dunkler ausgebildet wird als die Deckschicht.

Das Lasern erfolgt mit handelsüblichen bzw. bekannten Lasergeräten an Folien bzw. Formatzuschnitten, vorzugsweise mit einer Größe kleiner als 80 cm in Längs- und in Querrichtung. Die Oberfläche einer Folie bzw. eines Formatzuschnitts kann auch unterschiedliche Strukturen aufweisen und beispielsweise in einem Bereich das Aussehen von Velours und daneben das Aussehen von Kohlenstoffgewebe besitzen.

Beim Lasern der Basisschicht aus Polyolefin entstehen keine toxischen Dämpfe. Wenn die Deckschicht in bevorzugter Weise eine Stärke von 0,01 mm bis 0,02 mm aufweist und Polysiloxan enthält und die Gravur pixelartig vorgenommen wird, fallen keine nennenswerte Mengen toxischer Gase an.

Wenn die Basisschicht aus PVC besteht und die Deckschicht aus Polyacrylat besteht, entstehen beim Lasern der Deckschicht keine toxischen Gase. Beim PVC kann das Gas geringe Mengen Salzsäure enthalten, welche beim Absaugen einfach neutralisiert werden kann.

Durch die Abmischung von Polyacrylaten mit Polyurethanen in der dünnen Deckschicht und gegebenenfalls dem Zusatz von Polysiloxanen und/oder Microhohlkugeln und/oder Pigmenten wird die Bildung toxischer Gase beim Lasern ganz erheblich reduziert.

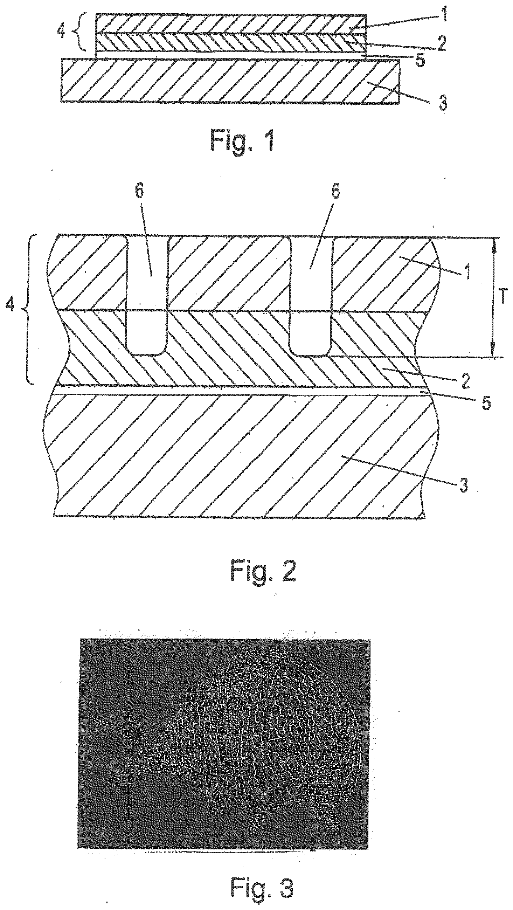

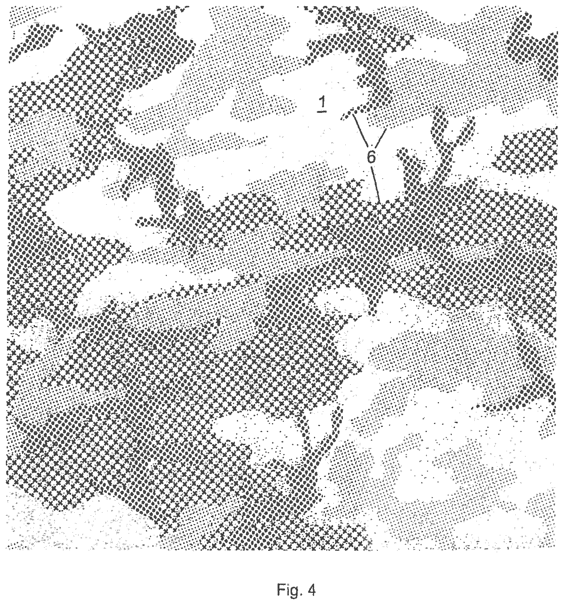

Fig. 1 zeigt einen schematischen Schnitt durch ein mit einer Folie bzw. einer Beschichtung 4 beschichtetes Substrat 3. Fig. 2 zeigt einen schematischen Schnitt durch eine Folie. Fig. 3 zeigt ein auf der Oberfläche der Folie hergestelltes Bild. Fig. 4 zeigt die Überfläche einer mit Vertiefungen versehenen Folie.

Gemäß Fig. 1 umfasst die Beschichtung 4 eine Deckschicht 1 und eine Basisschicht 2. Die Schichten 1, 2 sind farblich und chemisch unterschiedlich gestaltet. Wie Fig. 2 zeigt, sind in die Beschichtung 4 Vertiefungen 6 eingebracht, die die gegenüber der Deckschicht 1 farblich unterschiedlich gestaltete Basisschicht 2 freilegen, sodass die Basisschicht 2 gemeinsam mit der Deckschicht 1 ein zweifärbiges Muster durch Abtragung von Material der Deckschicht 1 ausbilden kann. Die Anzahl und Form der durch Laserbearbeitung erstellten Vertiefungen 6 pro cm² ist variabel und hängt vom gewünschten Erscheinungsbild ab. Die Vertiefungen 6 können sich zur Ausbildung von strichartigen Bereichen überlappen bzw. aneinander reihen.

In die Beschichtung 4 werden mit Laser Vertiefungen 6 vorgegebener Tiefe eingeschnitten, wobei diese Vertiefungen 6 die Deckschicht 1 durchdringen und in die Basisschicht 2 teilweise eindringen, wobei gegebenenfalls das Eindringen in einem Ausmaß von 0,01, vorzugsweise 0,025 mm bis 0,06 mm in die Basisschicht 2 erfolgt. Fig. 3 zeigt ein Gürteltier, das auf einer erfindungsgemäßen Folienbahn durch gezieltes, bereichsweises Abtragen der Deckschicht 1 ausgebildet wurde, sodass die helle Basisschicht 2 sichtbar wird.

Die Basisschicht aus Polyolefin wird im Gegensatz zur Basisschicht aus PVC vor dem Aufbringen der Deckschicht 1 "Corona" behandelt. Danach wird die Deckschicht 1 aus Dispersionen oder Lösungen in einer oder mehreren Schichten aufgetragen, getrocknet und gegebenenfalls vernetzt. Gleiches gilt für die Rückseite der Basisschicht 2 aus Polyolefin vor dem Aufbringen einer Primerschicht. Die Primerschicht kann eine wärmeaktivierbare Kleberschicht sein.

Bei einer Corona-Behandlung wird die Polyolefinfolienbahn auf bekannte Weise einer elektrischen Hochspannungs-Entladung ausgesetzt, mit dem Ziel, die Polarität der Oberfläche zu erhöhen. Die Corona Behandlung ist am fertigen Produkt nicht sichtbar, ist aber erforderlich, um Kunststoffe auf Polyolefin-Basis mit anderen Kunststoffen wie z.B. Polyurethan oder Polyacrylat zu verbinden.

Das Substrat 3 kann mit der Folie bzw. deren Basisschicht 2 mit einem Klebstoff verbunden werden. Es kann auch, wie in Fig. 1 und 2 dargestellt, vorgesehen sein, dass die Deckschicht 1 3 bis 11 Gew.-% Farbpigmente enthält und/oder dass die Deckschicht 1 eine Dicke von 0,01 bis 0,06 mm aufweist und/oder das die Deckschicht Silikon zur Verbesserung der Haptik enthält.

Die mit der Folie verbundenen Substrate 3 können als Bahnenware oder als Platte bzw. in beliebiger Form vorliegen.

Eine spezielle Anwendung der Erfindung kann die Ausbildung eines Barcodes oder eines Markenlogos oder eines schriftlichen Hinweis (z.B. "Airbag") durch Abtragen der Deckschicht durch Lasern umfassen. Eine transparente Basisschicht kann vor einer Lichtquelle im gelaserten Bereich auch Warnhinweise ermöglichen.

Die Vertiefungen können im Querschnitt rund oder elliptisch, in Kreuzform oder in Strichform ausgebildet sein, d.h. sie können alle Formen annehmen, wie sie mit einem Laser ausgebildet werden können.

Die Folie, die gegebenenfalls auf der Rückseite eine Primerschicht 5 aufweist, kann mit oder ohne Substrat auf Gegenstände, z.B. durch Tiefziehen bzw. Vakuumtiefziehen, aufgebracht werden.

Die Deckschicht 1 ist mit der Basisschicht 2 so stark verbunden, dass 1 cm³ MEK, aufgebracht auf die Deckschicht in einer Fläche von 100 cm², nach dem Verdampfen keinen Schaden hinterlässt.

Dadurch das die farbgebenden Bereiche in bevorzugter Weise zwischen 0,1 mm und 0,2 mm tiefer liegen als die Oberfläche der Deckschicht 1, zeigen Abriebwerte nach Taber mit dem Reibrad 10 nach 400 Touren keine oder keine nennenswerte Beschädigungen, während gleich große und gleich aussehende mit einer Polyurethanbinderfarbe aufgedruckte Stellen nach 200 Touren starke Beschädigungen aufweisen.

Das eingesetzte Polysiloxan liegt als nichtemigrierbare Dispersion in der Deckschicht 1 vor.

Die Basisschicht 2 ist vorteilhafterweise im Gegensatz zur Deckschicht 1 ausgeprägt thermoplastisch.

Fig. 4 zeigt die Ausbildung von pixelartig in der Folie ausgebildeten Vertiefungen 6. Durch Variation der Pixelgröße bzw. ihrer Flächenerstreckung und/oder der Form und/oder der Tiefe der Vertiefungen 6 lassen sich Schattierungen und Muster zusätzlich oder anstelle der Farbwirkung erzielen. In Fig. 4 sind kreuzförmige Vertiefungen sowie kreisförmige Vertiefungen unterschiedlicher Größe dargestellt, die ein unregelmäßiges Muster bilden.

Die Deckschicht 1 kann großflächig erhalten bleiben, wodurch u.a. eine Weichmacherwanderung verhindert und der Abrieb verringert wird.

## Patentansprüche

1. Mehrschichtige Folie umfassend eine zumindest einlagige Deckschicht (1) und eine mit der Deckschicht (1) flächenverbundene Basisschicht (2), wobei die Deckschicht (1) eine Schicht aus Polyurethan und/oder Polyacrylat, und/oder deren Mischungen ist, **dadurch gekennzeichnet,**
- **dass** die Deckschicht (1) eine Stärke von 0,01 mm und 0,06 mm aufweist und eine Schicht aus aliphatischem, vernetztem, gegebenenfalls nicht mehr thermoplastische Eigenschaften besitzendem, Polyurethan und/oder Polyacrylat, und/oder deren Mischungen ist,
- **dass** die Basisschicht (2) thermoplastisch ist und eine Stärke zwischen 0,15 mm und 0,40 mm aufweist und aus Polyolefin oder PVC besteht und
- **dass** die Deckschicht (1) und die Basisschicht (2) unterschiedliche Farbe besitzen und/oder ihr Gehalt an Farbpigmenten unterschiedlich groß ist, wobei die Deckschicht (1) einfärbig ausgebildet ist und Bereiche der Deckschicht (1) mit einer an sich bekannten Laservorrichtung abgetragen und die Basisschicht (2) in diesen Bereichen freigelegt ist, sodass die Folie in eine Folie mit einer zweifärbigen Oberfläche überfuhrt ist.

2. Folie nach Anspruch 1, **dadurch gekennzeichnet,**
- **dass** die Deckschicht (1) 3 bis 11 Gew.-% Farbpigmente enthält, und/oder
- **dass** die Deckschicht (1) eine Dicke von 0,01 bis 0,06 mm aufweist, und/oder
- **dass** die Deckschciht (1) 1,5 bis 9,5 Gew.-% Polysiloxan enthält.

3. Folie nach einem der Ansprüche 1 oder 2, **dadurch gekennzeichnet, dass** die Deckschicht (1) mit mehreren Schichten gleicher chemischer Zusammensetzung bzw. gleichem Aufbau aufgebaut ist und/oder, dass die Deckschicht (1) mit einem aliphatischem Polyesterpolyurethan und/oder Polycarbonatpolyurethan und/oder Polyetherpolyurethan und/oder Polyacrylat und/oder deren Mischungen gebildet ist.

4. Folie nach einem der Ansprüche 1 bis 3, **dadurch gekennzeichnet,**
- **dass** die Deckschicht (1) vernetzt ist und/oder dass die Deckschicht (1) dünner als die Basisschicht (2) ist, und/oder
- **dass** die Basisschicht (2) mit Kalanderwalzen und/oder Extrudern oder als Streichfolie gefertigt sind.

5. Folie nach einem der Ansprüche 1 bis 4, **dadurch gekennzeichnet, dass** die Folienbahn mit ihrer Basisschicht (2) mit einem Substrat (3) verbunden ist, wobei dieses Substrat (3) gegebenenfalls ein textiler Träger, wie ein Abstandsgewirke, Gewebe, Gewirke, oder Vlies ist.

6. Folie nach einem der Ansprüche 1 bis 5, **dadurch gekennzeichnet, dass** die Deckschicht (1) mit einer Oberflächenstruktur ausgebildet ist, die das Aussehen von Velours oder Nubuk, einem Kohlenstofffasergewebe, einer technischen Oberfläche, gegebenenfalls mit geometrischen Mustern, oder einer Ledemarbenstruktur besitzt.

7. Folien nach einem der Ansprüche 1 bis 6, **dadurch gekennzeichnet,**
- **dass** die Deckschicht (1) 2 bis 6 Vol.-%, gegebenenfalls thermoplastische, Mikrohohlkugeln enthält, die eine Größe zwischen 15 und 40 µm besitzen und/oder 1,5 bis 9,5 Gew.-% Polysiloxan enthält, und
- **dass** das Polysiloxan als nichtemigrierbare Dispersion eingebracht wurde.

8. Folien nach einem der Ansprüche 1 bis 7, **dadurch gekennzeichnet, dass** in die Deckschicht (1) mit Laser Vertiefungen (6) vorgegebener Tiefe eingeschnitten sind, wobei diese Vertiefungen (6) die Deckschicht (1) durchdringen und in die Basisschicht (2) teilweise eingedrungen sind, wobei gegebenenfalls eine Eindringtiefe (T) in die Basisschicht (2) von 0,01 bis 0,06 mm, vorzugsweise 0,01 mm bis 0,025 mm, vorgesehen ist und/oder, dass die Rückseite der Basisschicht (2) eine Primerschicht (5) aus Polyurethan und/oder Polyacrylat und/oder deren Mischungen, in einer Stärke zwischen 0,01 mm und 0,1 mm trägt.

9. Folie nach einem der Ansprüche 1 bis 8, **dadurch gekennzeichnet, dass** die aus Polyurethan gebildete Deckschicht (1) nach Abzug allfälliger Zusatzstoffe, wie z.B. Mikrohohlkugeln, Pigmente, Verdicker, Polysiloxan, zwischen 71 und 94 Gew.-% vernetztes Polyurethan enthält.

10. Folie nach einem der Ansprüche 1 bis 9, **dadurch gekennzeichnet, dass** mit der Folie Hüllen oder Bezüge für elektronische Geräte, z.B. Smartphones, Notebooks, Tabletcomputer, Reisecomputer, oder Brillenetuis, Schmuckschatullen, Verpackungen für Armbanduhren, oder für Fahrzeuginnenverkleidungen hergestellt sind, wobei gegebenenfalls auf der Oberfläche der Folie eine Marke oder ein Markenlogo ausgebildet ist und/oder, dass die gelaserte Folie mittels Wärme und Druck eine Prägung aufweist, die zu der Farblaserung passt.

11. Gegenstand, vorzugsweise Formatzuschnitt, umfassend eine oder hergestellt unter Einsatz einer Folie, die eine Deckschicht (1) und eine Basisschicht (2) und gegebenenfalls ein Substrat (3) umfasst, nach einem der Ansprüche 1 bis 10, **dadurch gekennzeichnet,**
- **dass** die Deckschicht (1) eine Schicht aus aliphatischem, vernetztem, gegebenenfalls nicht mehr thermoplastischen, Polyesterpolyurethan, und/oder Polyacrylat, und/oder deren Mischungen ist, und die Basisschicht (2) eine Schicht aus Polyolefin oder PVC ist,
- **dass** die Deckschicht (1) und die Basisschicht (2) unterschiedliche Farbe besitzen bzw. ihr Gehalt an Farbpigmenten unterschiedlich groß ist, und
- **dass** das gegebenenfalls vorhandene Substrat (3) mit der Oberfläche des Gegenstandes verbunden, insbesondere verklebt, ist.

12. Gegenstand nach Anspruch 11, **dadurch gekennzeichnet, dass** der Gegenstand eine Hülle oder ein Bezug für elektronische Geräte, z.B. Smartphones, Notebooks, Tabletcomputer, Reisecomputer, oder ein Brillenetui oder eine Schmuckschatulle oder eine Verpackung für eine Armbanduhr ist, wobei gegebenenfalls auf der Oberfläche der Folie eine Marke oder ein Markenlogo ausgebildet ist.

## Claims

1. Multilayer film comprising an at least single-ply outer layer (1) and a base layer (2) surface-bonded to the outer layer (1), wherein the outer layer (1) is a layer of polyurethane and/or polyacrylate and/or mixtures thereof, **characterized**
- **in that** the outer layer (1) has a thickness of 0.01 mm to 0.06 mm and is a layer of an aliphatic, crosslinked polyurethane and/or polyacrylate optionally no longer having thermoplastic properties and/or mixtures thereof,
- **in that** the base layer (2) is thermoplastic and has a thickness of between 0.15 mm and 0.40 mm and consists of polyolefin or PVC and
- **in that** the outer layer (1) and the base layer (2) have different colours and/or contain different amounts of colour pigments, wherein the outer layer (1) has a single colour and regions of the outer layer (1) are removed by means of a laser device which is known per se and the base layer (2) is exposed in these regions, with the result that the film is transformed into a film having a surface with two colours.

2. Film according to Claim 1, **characterized**
- **in that** the outer layer (1) contains 3 to 11 wt.% of colour pigments, and/or
- **in that** the outer layer (1) has a thickness of 0.01 to 0.06 mm, and/or
- **in that** the outer layer (1) contains 1.5 to 9.5 wt.% of polysiloxane.

3. Film according to either of Claims 1 and 2, **characterized in that** the outer layer (1) is made up of a plurality of layers with the same chemical composition and/or the same structure, and/or **in that** the outer layer (1) is formed with an aliphatic polyester polyurethane and/or polycarbonate polyurethane and/or polyether polyurethane and/or polyacrylate and/or mixtures thereof.

4. Film according to one of Claims 1 to 3, **characterized**
- **in that** the outer layer (1) is crosslinked and/or in that the outer layer (1) is thinner than the base layer (2), and/or
- **in that** the base layer (2) is manufactured by means of calender rolls and/or extruders or in the form of a spread film.

5. Film according to one of Claims 1 to 4, **characterized in that** the base layer (2) of the film web is bonded to a substrate (3), wherein this substrate (3) is optionally a textile carrier, such as a knitted spacer fabric, woven fabric, knitted fabric or nonwoven fabric.

6. Film according to one of Claims 1 to 5, **characterized in that** the outer layer (1) is formed with a surface structure which has the appearance of suede or nubuck, a carbon-fibre woven fabric, a technical surface, optionally with geometric patterns, or a leather-grained structure.

7. Films according to one of Claims 1 to 6, **characterized**
- **in that** the outer layer (1) contains 2 to 6 vol.% of optionally thermoplastic, hollow microspheres which have a size of between 15 and 40 pm, and/or contains 1.5 to 9.5 wt.% of polysiloxane, and
- **in that** the polysiloxane was introduced as a non-migratable dispersion.

8. Films according to one of Claims 1 to 7, **characterized in that** indentations (6) of a specified depth are cut into the outer layer (1) by means of a laser, wherein these indentations (6) penetrate through the outer layer (1) and have penetrated in part into the base layer (2), wherein optionally a penetration depth (T) into the base layer (2) of 0.01 to 0.06 mm, preferably 0.01 mm to 0.025 mm, is provided, and/or **in that** the rear side of the base layer (2) bears a primer layer (5) of polyurethane and/or polyacrylate and/or mixtures thereof with a thickness of between 0.01 mm and 0.1 mm.

9. Film according to one of Claims 1 to 8, **characterized in that**, after subtraction of possible additives, such as for example hollow microspheres, pigments, thickeners or polysiloxane, the outer layer (1) formed from polyurethane contains between 71 and 94 wt.% of crosslinked polyurethane.

10. Film according to one of Claims 1 to 9, **characterized in that** the film is used to produce casings or covers for electronic devices, for example smartphones, notebooks, tablet computers, travel computers, or spectacle cases, jewellery boxes, packaging for wristwatches, or for vehicle interior trim, wherein a brand or a brand logo is optionally formed on the surface of the film, and/or **in that** the lasered film is embossed by means of heat and pressure to match the colour lasering.

11. Article, preferably precut blank, comprising or produced using a film which comprises an outer layer (1) and a base layer (2) and optionally a substrate (3) according to one of Claims 1 to 10, **characterized**
- **in that** the outer layer (1) is a layer of an aliphatic, crosslinked, optionally no longer thermoplastic polyester polyurethane and/or polyacrylate and/or mixtures thereof, and the base layer (2) is a layer of polyolefin or PVC,
- **in that** the outer layer (1) and the base layer (2) have different colours or contain different amounts of colour pigments, and
- **in that** the optionally present substrate (3) is bonded, in particular adhesively bonded, to the surface of the article.

12. Article according to Claim 11, **characterized in that** the article is a casing or cover for electronic devices, for example smartphones, notebooks, tablet computers, travel computers, or a spectacle case or a jewellery box or packaging for a wristwatch, wherein a brand or a brand logo is optionally formed on the surface of the film.

## Revendications

1. Feuille multicouche comprenant une couche de finition au moins monocouche (1) et une couche de base (2), reliée en pleine surface à la couche de finition (1), la couche de finition (1) étant une couche de polyuréthanne et/ou de polyacrylate et/ou de mélanges de ceux-ci, **caractérisée en ce que**
- la couche de finition (1) présente une épaisseur de 0,01 mm à 0,06 mm et est une couche de polyuréthanne et/ou de polyacrylate aliphatiques, réticulés, éventuellement ne possédant plus de propriétés thermoplastiques, et/ou de mélanges de ceux-ci,
- la couche de base (2) est thermoplastique et présente une épaisseur comprise entre 0,15 mm et 0,40 mm, et est constituée de polyoléfine ou de PVC, et
- la couche de finition (1) et la couche de base (2) présentent des couleurs différentes, et/ou présentent des teneurs différentes en pigments colorés, la couche de finition (1) étant réalisée d'une seule couleur et des zones de la couche de finition (1) étant enlevées avec un dispositif à laser connu en soi et la couche de base (2) étant exposée dans ces zones, de sorte que la feuille est convertie en une feuille dotée d'une surface à deux couleurs.

2. Feuille selon la revendication 1, **caractérisée en ce que**
- la couche de finition (1) contient 3 à 11 % en poids de pigments colorés, et/ou
- la couche de finition (1) présente une épaisseur de 0,01 à 0,06 mm, et/ou
- la couche de finition (1) contient 1,5 à 9,5 % en poids de polysiloxane.

3. Feuille selon l'une des revendications 1 et 2, **caractérisée en ce que** la couche de finition (1) est construite avec plusieurs couches ayant la même composition chimique ou la même structure et/ou **en ce que** la couche de finition (1) est formée avec un polyesterpolyuréthanne aliphatique et/ou un polycarbonate-polyuréthanne et/ou un polyéther-polyuréthanne et/ou un polyacrylate et/ou les mélanges de ceux-ci.

4. Feuille selon l'une des revendications 1 à 3, **caractérisée**
- **en ce que** la couche de finition (1) est réticulée et/ou en ce que la couche de finition (1) est plus mince que la couche de base (2), et/ou
- **en ce que** la couche de base (2) est fabriquée avec des cylindres de calandrage et/ou des extrudeuses, ou sous forme d'une feuille étirable.

5. Feuille selon l'une des revendications 1 à 4, **caractérisée en ce que** la bande de feuille est, par sa couche de base (2), liée à un substrat (3), ce substrat (3) étant éventuellement un support textile, tel qu'un tricot d'écartement, un tissu, un tricot ou un non-tissé.

6. Feuille selon l'une des revendications 1 à 5, **caractérisée en ce que** la couche de finition (1) est formée avec une structure superficielle qui possède l'aspect du velours ou du nubuck, d'un tissu de fibres de carbone, d'une surface technique, éventuellement comportant des motifs géométriques, ou d'une structure de fleur de cuir.

7. Feuilles selon l'une des revendications 1 à 6, **caractérisées**
- **en ce que** la couche de finition (1) contient 2 à 6 % en volume de microbilles creuses, éventuellement thermoplastiques, qui possèdent une grosseur comprise entre 15 et 40 µm, et/ou contient 1,5 à 9,5 % en poids de polysiloxane, et
- **en ce que** le polysiloxane est incorporé en tant que dispersion non émigrable.

8. Feuilles selon l'une des revendications 1 à 7, **caractérisées en ce que** des renfoncements (6), ayant une profondeur prédéfinie, sont entaillés à l'aide d'un laser dans la couche de finition (1), ces renfoncements (6) traversant la couche de finition (1) et pénétrant partiellement dans la couche de base (2), auquel cas il est éventuellement prévu une profondeur de pénétration (T) dans la couche de base (2) de 0,01 à 0,06 mm, de préférence de 0,01 mm à 0,025 mm, et/ou **en ce que** la face arrière de la couche de base (2) porte une couche primaire (5) en polyuréthanne et/ou en polyacrylate et/ou en leurs mélanges, sur une épaisseur comprise entre 0,01 mm et 0,1 mm.

9. Feuille selon l'une des revendications 1 à 8, **caractérisée en ce que** la couche de finition (1) formée de polyuréthanne, après enlèvement des éventuels additifs, tels que par ex. les microbilles creuses, les pigments, les épaississants, un polysiloxane, contient entre 71 et 94 % en poids de polyuréthanne réticulé.

10. Feuille selon l'une des revendications 1 à 9, **caractérisée en ce que** des enveloppes ou des revêtements pour des appareils électroniques, par ex. des mobiles multifonctions, des bloc-notes électroniques, des tablettes, des ordinateurs de voyage ou des étuis à lunettes, des coffrets à bijoux, des emballages pour montres-bracelets, ou pour des habillages intérieurs pour automobiles sont fabriqués avec la feuille, éventuellement une marque ou un logo de marque étant formé(e) sur la surface de la feuille, et/ou **en ce que** la feuille traitée au laser présente un gaufrage au moyen de chaleur et de pression, qui convient à l'impression laser couleur.

11. Objet, de préférence découpe au format, comprenant une feuille, ou fabriqué par utilisation d'une feuille qui comprend une couche de finition (1) et une couche de base (2) et éventuellement un substrat (3), selon l'une des revendications 1 à 10, **caractérisé**
- **en ce que** la couche de finition (1) est une couche de polyester-polyuréthanne aliphatique, réticulé, qui éventuellement n'est plus thermoplastique, et/ou de polyacrylate et/ou de mélanges de ceux-ci, et la couche de base (2) est une couche de polyoléfine ou de PVC,
- **en ce que** la couche de finition (1) et la couche de base (2) présentent des couleurs différentes, ou ont des teneurs différentes en pigments colorés, et
- **en ce que** le substrat (3) éventuellement présent est lié, en particulier collé, à la surface de l'objet.

12. Objet selon la revendication 11, **caractérisé en ce que** l'objet est une enveloppe ou un revêtement pour appareils électroniques, par ex. des mobiles multifonctions, des bloc-notes électroniques, des tablettes, des ordinateurs de voyage, ou un étui à lunettes ou une boîte à bijoux ou un emballage pour une montre-bracelet, éventuellement une marque ou un logo de marque étant formé(e) sur la surface de la feuille.
